(19) Europäisches Patentamt European Patent Office Office européen des brevets

(11) EP 4 343 372 A1

(12) EUROPEAN PATENT APPLICATION

(43) Date of publication:
   27.03.2024 Bulletin 2024/13

(21) Application number: 23194725.0

(22) Date of filing: 31.08.2023

(51) International Patent Classification (IPC):
   G01S 7/48 (2006.01)          G01S 17/58 (2006.01)
   G01S 17/66 (2006.01)         G01S 17/86 (2020.01)
   G06T 7/70 (2017.01)

(52) Cooperative Patent Classification (CPC):
   G01S 17/66; G01S 7/4808; G01S 17/58;
   G01S 17/86; G06T 7/246; G06T 2207/10028;
   G06T 2207/30184; G06T 2207/30232;
   G06T 2207/30241

(84) Designated Contracting States:
   AL AT BE BG CH CY CZ DE DK EE ES FI FR GB
   GR HR HU IE IS IT LI LT LU LV MC ME MK MT NL
   NO PL PT RO RS SE SI SK SM TR
   Designated Extension States:
   BA
   Designated Validation States:
   KH MA MD TN

(30) Priority: 20.09.2022 CN 202211140019

(71) Applicant: Innovusion (Wuhan) Co., Ltd.
   430056 Wuhan City Hubei (CN)

(72) Inventors:
   • WEI, Yutang
     Wuhan City, 430056 (CN)

   • JIN, Yikang
     Wuhan City, 430056 (CN)
   • DENG, Changmin
     Wuhan City, 430056 (CN)
   • ZHOU, Tianwen
     Wuhan City, 430056 (CN)
   • WU, Xiaoquan
     Wuhan City, 430056 (CN)
   • WU, Difei
     Wuhan City, 430056 (CN)

(74) Representative: Sackin, Robert
   Reddie & Grose LLP
   The White Chapel Building
   10 Whitechapel High Street
   London E1 8QS (GB)

(54) METHOD AND APPARATUS FOR IDENTIFYING FALLING OBJECT BASED ON LIDAR SYSTEM, AND READABLE STORAGE MEDIUM

(57) The present disclosure provides a method (100) and an apparatus for identifying a falling object based on a LiDAR system, and a readable storage medium. The method includes: obtaining a point cloud data set of a LiDAR system (S 110); identifying a dynamic point cloud cluster set based on the point cloud data at the first moment and the point cloud data at the second moment, where the dynamic point cloud cluster set includes at least one dynamic point cloud cluster (S120); and enabling a tracking and determination process in response to identifying the dynamic point cloud cluster set (S130). For each dynamic point cloud cluster, a data set of a dynamic point cloud cluster at each current moment following the second moment is updated in real time, where the data set of the dynamic point cloud cluster includes at least data representing a position of the dynamic point cloud cluster in a direction of gravity (S 131); it is determined whether the data representing the position of the dynamic point cloud cluster in the direction of gravity within a set time period meets a law of free fall (S 132); and it is determined that an object represented by the dynamic point cloud cluster is a falling object in response to determining that the data meets the law of free fall (S133).

FIG. 1

EP 4 343 372 A1

**Description**

**TECHNICAL FIELD**

The present disclosure relates to the field of LiDAR system, and more particularly to a method and an apparatus for identifying a falling object based on a LiDAR system, a computer device, an electronic device, and a computer-readable storage medium.

**BACKGROUND ART**

With the development of infrastructure construction, more and more high-rise buildings are becoming landmark buildings of cities, which are accompanied with such a problem of high-altitude falling objects that troubles the life safety of people and affects the normal social order while saving on urban land and meeting housing and living needs of people. In different scenarios, high-altitude falling objects may occur in different forms, but the potential safety hazards caused by the high-altitude falling objects cannot be underestimated regardless of the forms in which they occur and the sizes of the objects.

Methods described in this section are not necessarily methods that have been previously conceived or employed. It should not be assumed that any of the methods described in this section is considered to be the prior art just because they are included in this section, unless otherwise indicated expressly. Similarly, the problem mentioned in this section should not be considered to be universally recognized in any prior art, unless otherwise indicated expressly.

**SUMMARY OF THE INVENTION**

An objective of the present disclosure is to provide a solution, by which whether a falling object event occurs can be accurately identified based on a light detection and ranging (LiDAR) system.

According to a first aspect of an embodiment of the present disclosure, a method for identifying a falling object based on a LiDAR system is provided. The method for identifying a falling object includes: obtaining a point cloud data set of a LiDAR system, where the point cloud data set includes point cloud data of the LiDAR system at a first moment and point cloud data of the LiDAR system at a second moment, and the second moment follows the first moment; identifying a dynamic point cloud cluster set based on the point cloud data at the first moment and the point cloud data at the second moment, where the dynamic point cloud cluster set includes at least one dynamic point cloud cluster; and enabling a tracking and determination process in response to identifying the dynamic point cloud cluster set. For each dynamic point cloud cluster in the dynamic point cloud cluster set, a data set of a dynamic point cloud cluster at each current moment following the second moment is updated in real time, where the data set of the dynamic point cloud cluster includes at least data representing a position of the dynamic point cloud cluster in a direction of gravity; it is determined whether the data representing the position of the dynamic point cloud cluster in the direction of gravity within a set time period meets a law of free fall; and it is determined that an object represented by the dynamic point cloud cluster is a falling object in response to determining that the data meets the law of free fall.

According to a second aspect of an embodiment of the present disclosure, an apparatus for identifying a falling object based on a LiDAR system is provided. The apparatus for identifying a falling object includes: a first unit configured to obtain a point cloud data set of a LiDAR system, where the point cloud data set includes point cloud data of the LiDAR system at a first moment and point cloud data of the LiDAR system at a second moment, and the second moment follows the first moment; a second unit configured to identify a dynamic point cloud cluster set based on the point cloud data at the first moment and the point cloud data at the second moment, where the dynamic point cloud cluster set includes at least one dynamic point cloud cluster; and a third unit configured to enable the following tracking and determination process for a falling object in response to identifying the dynamic point cloud cluster set: for each dynamic point cloud cluster in the dynamic point cloud cluster set, updating, in real time, a data set of a dynamic point cloud cluster of the LiDAR system at each current moment following the second moment, where the data set of the dynamic point cloud cluster includes at least data representing a position of the dynamic point cloud cluster in a direction of gravity; determining whether the data representing the position of the dynamic point cloud cluster in the direction of gravity within a set time period meets a law of free fall; and determining that an object represented by the dynamic point cloud cluster is a falling object in response to determining that the data meets the law of free fall.

According to a third aspect of an embodiment of the present disclosure, there is provided a computer device, including: at least one processor; and at least one memory having a computer program stored thereon, where the computer program, when executed by the at least one processor, causes the at least one processor to perform the above method for identifying a falling object based on a LiDAR system.

According to a fourth aspect of an embodiment of the present disclosure, there is provided an electronic device, including a LiDAR system and the above apparatus for identifying a falling object based on a LiDAR system or the above computer device.

According to a fifth aspect of an embodiment of the present disclosure, there is provided a computer-readable storage medium having a computer program stored thereon, where the computer program, when executed by a processor, causes the processor to perform the above method for identifying a falling object based on a LiDAR system.

According to one or more embodiments of the present disclosure, a method and an apparatus for identifying a falling object based on a LiDAR system, a computer device, an electronic device, and a computer-readable storage medium are proposed. By means of the method and apparatus for identifying a falling object, the computer device, the electronic device, and the computer-readable storage medium, real-time detection of the falling object is implemented, and a new solution is provided for all-day detection of falling objects in different scenarios.

## BRIEF DESCRIPTION OF THE DRAWINGS

The drawings exemplarily show embodiments and form a part of the specification, and are used to illustrate exemplary implementations of the embodiments together with a written description of the specification. The embodiments shown are merely for illustrative purposes and do not limit the scope of the claims. Throughout the accompanying drawings, the same reference numerals denote same elements, or similar but not necessarily same elements.

FIG. 1 is a schematic flowchart of a method for identifying a falling object based on a LiDAR system according to an embodiment of the present disclosure;

FIG. 2 is a schematic flowchart of obtaining a point cloud data set of a LiDAR system in a method for identifying a falling object according to an embodiment of the present disclosure;

FIG. 3 is a schematic flowchart of identifying a dynamic point cloud cluster set in a method for identifying a falling object according to an embodiment of the present disclosure;

FIG. 4 is a schematic flowchart of a tracking and determination process for a falling object in a method for identifying a falling object according to an embodiment of the present disclosure;

FIG. 5 is a schematic flowchart of a method for identifying a falling object based on a LiDAR system according to an embodiment of the present disclosure;

FIG. 6 is a schematic diagram of an exemplary scenario to which a method for identifying a falling object according to an embodiment of the present disclosure may be applied; and

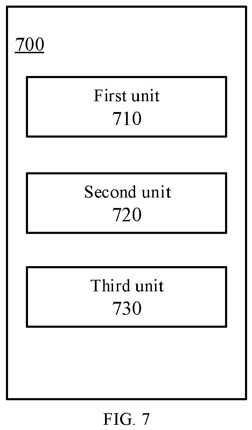

FIG. 7 is a schematic block diagram of an apparatus for identifying a falling object based on a LiDAR system according to an embodiment of the present disclosure.

## DETAILED DESCRIPTION OF THE PREFERRED EMBODIMENTS

The present disclosure will be further described in detail below with reference to the drawings and embodiments. It can be understood that specific embodiments described herein are used merely to explain a related invention, rather than limit the invention. It should be additionally noted that, for ease of description, only parts related to the related invention are shown in the drawings.

It should be noted that the embodiments in the present disclosure and features in the embodiments can be combined with each other without conflict. If the number of elements is not specifically defined, there may be one or more elements, unless otherwise expressly indicated in the context. In addition, numbers of steps or functional modules used in the present disclosure are used merely to identify the steps or functional modules, rather than limit either a sequence of performing the steps or a connection relationship between the functional modules.

In the present disclosure, unless otherwise stated, the terms "first", "second", etc., used to describe various elements are not intended to limit the positional, temporal or importance relationship of these elements, but rather only to distinguish one element from another. In some examples, the first element and the second element may refer to the same instance of the element, and in some cases, based on contextual descriptions, the first element and the second element may also refer to different instances.

The terms used in the description of the various examples in the present disclosure are for the purpose of describing particular examples only and are not intended to be limiting. If the number of elements is not specifically defined, there may be one or more elements, unless otherwise expressly indicated in the context. Moreover, the term "and/or" used in the present disclosure encompasses any of and all possible combinations of listed items.

"LiDAR system", as a high-precision ranging instrument, is widely applied in robotics, driving, navigation and other fields due to its many advantages of light weight, small size, high ranging accuracy, strong anti-interference ability, etc. The main working principle of the LiDAR system is to implement three-dimensional scanning measurement and imaging of a target profile through high-frequency ranging and scanning goniometry. Compared with common sensors such as a camera and a millimeter-wave radar, the LiDAR system has a powerful three-dimensional spatial resolution capability.

Falling objects, particularly phenomena of throwing objects from a high altitude, are called "the pain hanging over cities". In recent years, the cases of casualties caused by high-altitude falling objects have been constantly reported in newspapers, and the long-term existence of such stubborn problems is questioning urban management. In addition to causing casualties, high-altitude falling objects near roads and tracks may also cause potential safety hazards to the driving safety of vehicles and rail trains. At present, only manners of warning slogans, propaganda and education, etc. are often used to make people be aware of the hazards of high-altitude falling objects, and identification, early warning or prevention of the high-altitude falling objects cannot be effectively implemented in practice. Although some camera-based detection means can be used in some fields, the detection means are restricted by the limitations of cameras themselves. For example, effective detection cannot be implemented at night, in rainy and foggy days and other harsh conditions. As a result, all-day identification, early warning or prevention of falling objects, particularly high-altitude falling objects, have not been implemented.

According to an embodiment of the present disclosure, a method for identifying a falling object based on a LiDAR system is proposed. In the method, point cloud data is acquired in real time based on a LiDAR system, and through dynamic point cloud identification and data processing, it can be accurately identified whether a falling object event occurs.

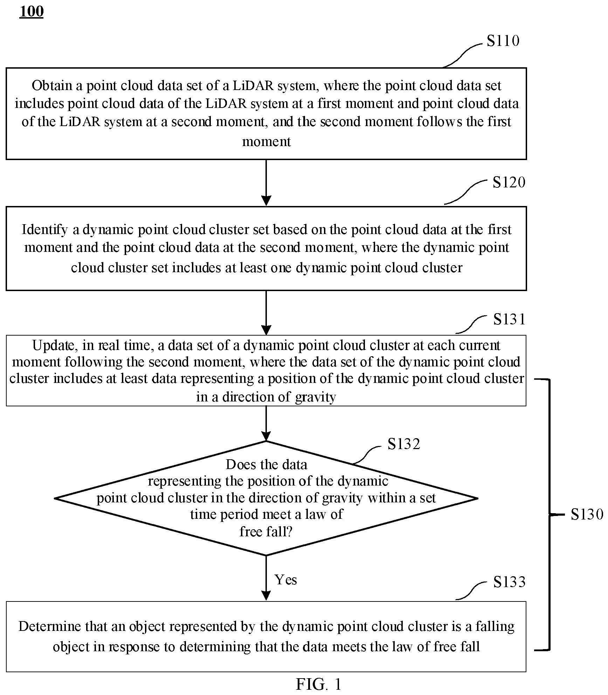

FIG. 1 is a schematic flowchart of a method 100 for identifying a falling object based on a LiDAR system according to some embodiments of the present disclosure. As shown in FIG. 1, the method 100 for identifying a falling object based on a LiDAR system includes:

step S110: obtaining a point cloud data set of a LiDAR system, where the point cloud data set includes point cloud data of the LiDAR system at a first moment and point cloud data of the LiDAR system at a second moment, and the second moment follows the first moment;

step S120: identifying a dynamic point cloud cluster set based on the point cloud data at the first moment and the point cloud data at the second moment, where the dynamic point cloud cluster set includes at least one dynamic point cloud cluster; and

step S130: in response to identifying the dynamic point cloud cluster set, determining the second moment as a moment at which the dynamic point cloud cluster is identified, and enabling a tracking and determination process for a falling object.

In step S130, the tracking and determination process for a falling object includes: for each dynamic point cloud cluster in the dynamic point cloud cluster set:

step S131: updating, in real time, a data set of a dynamic point cloud cluster at each current moment following the second moment, where the data set of the dynamic point cloud cluster includes at least data representing a position of the dynamic point cloud cluster in a direction of gravity;

step S132: determining whether the data representing the position of the dynamic point cloud cluster in the direction of gravity within a set time period meets a law of free fall; and

step S133: determining that an object represented by the dynamic point cloud cluster is a falling object in response to determining that the data meets the law of free fall.

In some embodiments, in step S110, a multi-line LiDAR system (such as a 16-line LiDAR system, a 32-line LiDAR system, or a 64-line LiDAR system) can be used to acquire the point cloud data in real time at a frequency of 8 to 10 Hz. The multi-line LiDAR system has an ultra-long detection range and an ultra-high resolution, and high-quality point cloud acquired thereby provides guarantee for the identification of smaller objects.

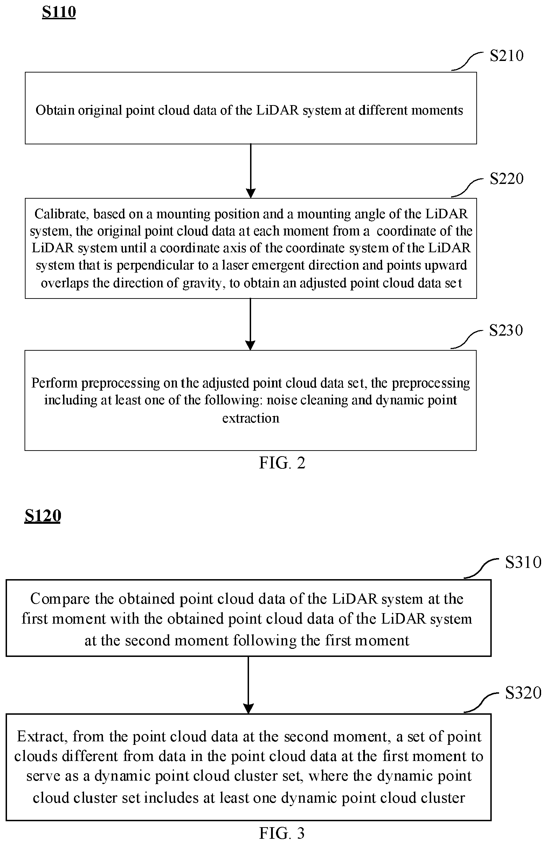

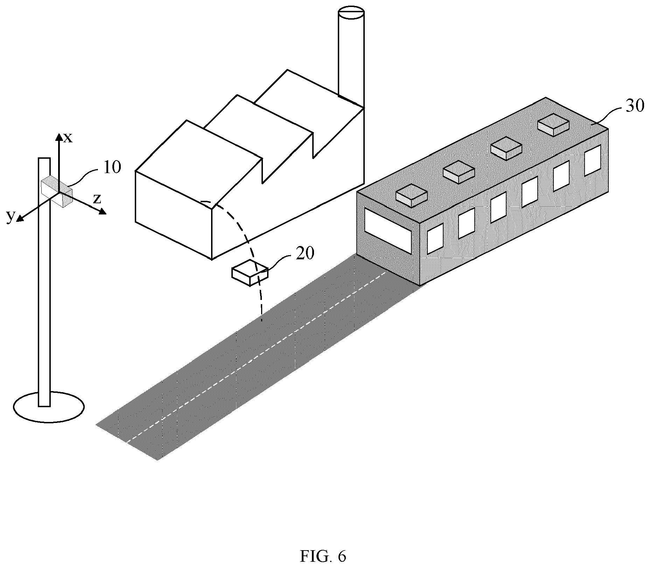

Referring to FIG. 2, in some embodiments, obtaining a point cloud data set of a LiDAR system in step S110 includes: step S210: obtaining original point cloud data of the LiDAR system at different moments; and step S220: calibrating, based on a mounting position and a mounting angle of the LiDAR system, the original point cloud data at each moment from a coordinate system of the LiDAR system until a coordinate axis (that is, an X axis) of the coordinate system of the LiDAR system that is perpendicular to a laser emergent direction and points upward overlaps the direction of gravity, to obtain an adjusted point cloud data set. To obtain a better field of view for detecting a high-altitude falling object, the LiDAR system is generally not mounted in a direction parallel to a horizontal plane during mounting, but rather at a certain pitch angle relative to the horizontal plane. For the convenience of subsequent calculations, according to some embodiments of the present disclosure, the point cloud data needs to be subjected to direction calibration through an Euler transform to obtain the adjusted point cloud data set. In some embodiments, as shown in FIG. 6, a direction of laser light emitted from a view window of the LiDAR system 10 is defined as a Z axis, a Y axis is located on the same horizontal plane as the Z axis and is set rightwards at an angle of 90°, and an X axis is perpendicular to the horizontal plane where the Y axis and the Z axis are located and goes straight up, that is, the X axis is a coordinate axis that is perpendicular to the laser emergent direction and points upward. An origin of the coordinate system of the LiDAR system is translated along the direction of the X axis to a certain extent, and a pitch angle of the coordinate system of the LiDAR system is transformed based on an actual mounting angle of the LiDAR system, and finally, the X axis of the coordinate system of the LiDAR system overlaps an axis in the direction of gravity to obtain the adjusted point cloud data set A.

Referring to FIG. 2, in some embodiments, obtaining a point cloud data set of a LiDAR system in step S110 further includes: step S230: performing preprocessing on the adjusted point cloud data set A, where the preprocessing includes at least one of the following: noise cleaning and dynamic point extraction. For example, with data continuity, noise cleaning and dynamic point extraction are performed on the point cloud data subjected to the direction calibration, to obtain the point cloud data set A'. The data preprocessing is to facilitate subsequent identification operations for the point cloud data.

Referring to FIG. 3, in some embodiments, step S120 includes:

step S310: comparing the obtained point cloud data of the LiDAR system at the first moment with the obtained point cloud data of the LiDAR system at the second moment following the first moment; and
step S320: extracting, from the point cloud data at the second moment, a set of point clouds different from data in the point cloud data at the first moment to serve as a dynamic point cloud cluster set B, where the dynamic point cloud cluster set includes at least one dynamic point cloud cluster $B_m$, m being a natural number. For example, the dynamic point cloud cluster set $B = \{B_1, B_2, B_3, ..., B_M\}$, M being a total number of dynamic point cloud clusters.

In some embodiments, it can be determined whether dynamic points exist by comparing whether data representing a same position in two frames of data acquired by the LiDAR system at two adjacent moments changes. At least one dynamic point cloud cluster can be obtained, for example, by classifying and aggregating dynamic point clouds, where each dynamic point cloud cluster can represent one motion object.

In step S130, after it is determined that the dynamic point cloud cluster $B_m$ exists, the tracking and determination process for the falling object is enabled. In some embodiments, in step S131, the data set of the dynamic point cloud cluster includes data of the dynamic point cloud cluster that is obtained at different moments, and the data of the dynamic point cloud cluster includes at least one piece of the following information: shape feature information, position feature information, and motion feature information of the dynamic point cloud cluster. For example, the data of the dynamic point cloud cluster includes shape, position and motion feature data $\{l_x, l_y, l_z, s_l, s_w, s_h, v_x, v_y, v_z, \alpha_x, \alpha_y, \alpha_z\}$ of the dynamic point cloud cluster, where $l_x, l_y$, and $l_z$ are position information of the dynamic point cloud cluster in $x, y$, and $z$ directions (for example, positions of a geometric center of the dynamic point cloud cluster in the x, y and z directions), $s_l, s_w$, and $s_h$ are length, width and height information of the dynamic point cloud cluster, $v_x, v_y$, and $v_z$ are velocity information of the dynamic point cloud cluster in the $x, y$, and $z$ directions (for example, velocity information of the geometric center of the dynamic point cloud cluster in the x, y and z directions), and $\alpha_x, \alpha_y$, and $\alpha_z$ are acceleration information of the dynamic point cloud cluster in the $x, y$, and $z$ directions (for example, acceleration information of the geometric center of the dynamic point cloud cluster in the x, y and z directions).

In some embodiments, in step S131, the obtained dynamic point cloud cluster set is tracked, and the data set $B_m = \{B_{m,t_0}, B_{m,t_1}, B_{m,t_2}, ..., B_{m,t_n}\}$ of each dynamic point cloud cluster is updated in real time, where $t_O$ is a time (that is, the second moment) at which the dynamic point cloud cluster $B_m$ is identified for the first time, and $B_{m,t_0}$ is a data set of the dynamic point cloud cluster that is updated in real time when the dynamic point cloud cluster is identified for the first time; and $t_n$ is a time at which the dynamic point cloud cluster $B_m$ is identified for the last time within the set time period, and $B_{m,t_n}$ is a data set of the dynamic point cloud cluster that is updated in real time when the dynamic point cloud cluster is identified for the last time.

It should be noted that the dynamic point cloud cluster will be identified at each moment following the second moment $t_O$, that is, at each moment after the beginning of identification of a specific dynamic point cloud cluster $B_m$. An identification method includes, but is not limited to: comparing point cloud data at each current moment with the point cloud data at the first moment, where the point cloud data obtained at the first moment can be considered as background data or reference data; or comparing point cloud data at each current moment with point cloud data at a previous moment of the current moment. After it is identified that a dynamic point cloud cluster corresponding to the dynamic point cloud cluster $B_m$ at the second moment exists at the current moment, the process proceeds to step S131: updating the data set of the dynamic point cloud cluster in real time.

In some embodiments, the set time period is at least part of a time period between the second moment and the last moment at which the LiDAR system is capable of detecting the dynamic point cloud cluster. In some examples, the set time period represents a predetermined time period. For example, if the LiDAR system can obtain 8 frames of data within 1 s, an interval between the frames is 0.125 seconds. In some embodiments of the present disclosure, it can be set such that it can be determined, based on, for example, data within 5 frames (that is, within 0.625 seconds) after the determination of the dynamic point cloud cluster (that is, the second moment), whether the data representing the position of the dynamic point cloud cluster in the direction of gravity meets the law of free fall. In some other examples, the set time period can represent the time period between the second moment and the last moment at which the LiDAR system is capable of detecting the dynamic point cloud cluster, that is, whether the data representing the position of the dynamic point cloud cluster in the direction of gravity meets the law of free fall is determined based on all data obtained between the moment (that is, the second moment) at which the dynamic point cloud cluster is identified and a moment at which an object corresponding to the dynamic point cloud cluster leaves the field of view of the LiDAR system or does not move any more.

In some embodiments, determining whether the data representing the position of the dynamic point cloud cluster in the direction of gravity within a set time period meets a law of free fall in step S 132 includes: determining whether a difference between a position of the dynamic point cloud cluster in the direction of gravity and an expected position of the dynamic point cloud cluster in the direction of gravity that meets the law of free fall is less than or equal to a threshold.

In some embodiments, the difference is a deviation, at each current moment within the set time period, between the position of the dynamic point cloud cluster in the direction of gravity and the expected position of the dynamic point cloud cluster in the direction of gravity that meets the law of free fall. For example, in step S132, for each current moment within the set time period, it is determined whether a deviation between a position $l_x(t_i)$ of the dynamic point cloud cluster in the direction of gravity and a position $l_{\tilde{x}}(t_i)$ calculated by the following free fall motion model (1) is less than or equal to the threshold:

$$l_{\tilde{x}}(t_i) = l_x(t_0) + v_x(t_0) \times t_i - g \times t_i^2 \quad (1)$$

where $l_{\tilde{x}}(t_i)$ represents an expected position of the dynamic point cloud cluster in the direction of gravity that meets the law of free fall at a current moment; $l_x(t_0)$ represents a position of the dynamic point cloud cluster in the direction of gravity at a moment (that is, the second moment) at which the dynamic point cloud cluster is identified; $v_x(t_0)$ represents a velocity of the dynamic point cloud cluster in the direction of gravity at the moment (that is, the second moment) at which the dynamic point cloud cluster is identified; $t_i$ represents a time difference between the current moment and the moment (that is, the second moment) at which the dynamic point cloud cluster is identified; $g$ is a gravitational acceleration; and $i$ is any natural number between 0 and n, n representing a total number of times the point cloud data of the LiDAR system is obtained within the set time period to update the data set of each dynamic point cloud cluster.

If at each current moment within the set time period, the deviation between the position of the dynamic point cloud cluster in the direction of gravity and the expected position of the dynamic point cloud cluster in the direction of gravity that meets the law of free fall, is less than or equal to the threshold, it is determined that the data representing the position of the dynamic point cloud cluster in the direction of gravity within the set time period meets the law of free fall, and it is determined that the object represented by the dynamic point cloud cluster is the falling obj ect.

In some embodiments, the above threshold is zero, for example. Within a set time period after the second moment, it is determined whether a value of an actual position $l_x(t_i)$ of the dynamic point cloud cluster in the direction of gravity at the current moment is equal to a value of a calculated position $l_x(t_0) + v_x(t_0) \times t_i - g \times t_i^2$ of the dynamic point cloud cluster in the direction of gravity that meets the law of free fall at the current moment. It is worth noting that in the present disclosure, "equal" is not intended to define two values to be absolutely the same, and even if there is an error, it should be considered that the two values are "equal" as long as the error falls within an allowable range.

In step S132, the velocity $v_x(t_0)$ of the dynamic point cloud cluster in the direction of gravity at the moment at which the dynamic point cloud cluster is identified can be determined according to the following equation (2):

$$v_x(t_0) = \left(l_x(t_1) - l_x(t_0)\right)/t \quad (2)$$

where $l_x(t_0)$ represents the position of the dynamic point cloud cluster in the direction of gravity at the moment (that is, the second moment) at which the dynamic point cloud cluster is identified, $l_x(t_1)$ represents a position of the dynamic point cloud cluster in the direction of gravity at a next moment of the moment (that is, the second moment) at which the dynamic point cloud cluster is identified, and $t$ represents a time interval between any two adjacent moments.

In some other embodiments, the difference is a mean square error of the deviation, within the set time period, between the position of the dynamic point cloud cluster in the direction of gravity and the expected position of the dynamic point cloud cluster in the direction of gravity that meets the law of free fall.

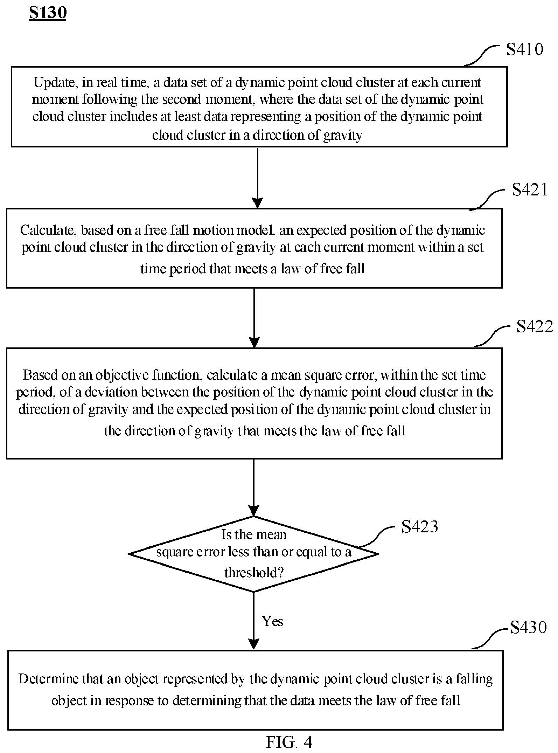

FIG. 4 is a schematic flowchart of a tracking and determination process for a falling object in a method for identifying a falling object according to an embodiment of the present disclosure, in which whether the object represented by the dynamic point cloud cluster is the falling object is determined based on the above mean square error.

Referring to FIG. 4, in step S130, the tracking and determination process for a falling object includes the steps as follows.

In step S410, a data set of a dynamic point cloud cluster at each current moment following the second moment is updated in real time, where the data set of the dynamic point cloud cluster includes at least data representing a position of the dynamic point cloud cluster in a direction of gravity.

In step S421, an expected position of the dynamic point cloud cluster in the direction of gravity that meets a law of free fall, at each current moment within a set time period, is calculated based on the free fall motion model described above, that is, the following equation:

$$l_{\tilde{x}}(t_i) = l_x(t_0) + v_x(t_0) \times t_i - g \times t_i^2 \, ,$$

where $l_{\tilde{x}}(t_i)$ represents an expected position of the dynamic point cloud cluster in the direction of gravity that meets the law of free fall at a current moment, that is, the moment at which the point cloud data of the LiDAR system is obtained for the $i^{th}$ time; $l_x(t_0)$ represents a position of the dynamic point cloud cluster in the direction of gravity at a moment at which the dynamic point cloud cluster is identified; $v_x(t_0)$ represents a velocity of the dynamic point cloud cluster in the direction of gravity at the moment at which the dynamic point cloud cluster is identified; $t_i$ represents a time difference between the current moment, that is, the moment at which the point cloud data of the LiDAR system is obtained for the $i^{th}$ time and the moment at which the dynamic point cloud cluster is identified; and $g$ is a gravitational acceleration.

The velocity $v_x(t_0)$ of the dynamic point cloud cluster in the direction of gravity at the moment at which the dynamic point cloud cluster is identified can be determined according to formula (2) described above, that is, the following formula:

$$v_x(t_0) = \left(l_x(t_1) - l_x(t_0)\right)/t \, ,$$

where $l_x(t_0)$ represents the position of the dynamic point cloud cluster in the direction of gravity at the moment (that is, the second moment) at which the dynamic point cloud cluster is identified, $l_x(t_1)$ represents a position of the dynamic point cloud cluster in the direction of gravity at a next moment of the moment (that is, the second moment) at which the dynamic point cloud cluster is identified, and $t$ represents a time interval between any two adjacent moments.

In step S422, a mean square error of a deviation, within the set time period, between the position of the dynamic point cloud cluster in the direction of gravity and the expected position of the dynamic point cloud cluster in the direction of gravity that meets the law of free fall is calculated based on the following objective function (3):

$$f = \sum_{i=0}^{n} \left(a \times \left(l_{\tilde{x}}(t_i) - l_x(t_i)\right)^2\right) \quad (3)$$

where a is a set constant; $l_x(t_i)$ represents an expected position of the dynamic point cloud cluster in the direction of gravity that meets the law of free fall when the point cloud data of the LiDAR system is obtained for the $i^{th}$ time; $l_x(t_i)$ represents a position of the dynamic point cloud cluster in the direction of gravity when the point cloud data of the LiDAR system is obtained for the $i^{th}$ time; i is any natural number between 0 and n, n representing a total number of times the point cloud data of the LiDAR system is obtained within the set time period; and $t_0$ represents a moment (that is, the second moment) within the set time period at which the dynamic point cloud cluster is identified for the first time, and $t_n$ represents a moment within the set time period at which the dynamic point cloud cluster is identified for the last time.

In some embodiments, the constant a is set based on at least one of the following factors: an air resistance coefficient, an air density, a windward area of the object represented by the dynamic point cloud cluster, and a velocity of the object relative to air.

For those skilled in the art, it can be understood that the difference may also be determined by other methods for determining a deviation between an actual value and an expected value.

In step S423, it is determined whether the mean square error of the deviation between the position of the dynamic point cloud cluster in the direction of gravity and the expected position of the dynamic point cloud cluster in the direction of gravity that meets the law of free fall is less than or equal to a threshold.

In step S430: it is determined that an object represented by the dynamic point cloud cluster is a falling object in response to determining that the data meets the law of free fall. If the mean square error of the deviation, within the set time period, between the position of the dynamic point cloud cluster in the direction of gravity and the expected position of the dynamic point cloud cluster in the direction of gravity that meets the law of free fall is less than or equal to the threshold, it is determined that the data representing the position of the dynamic point cloud cluster in the direction of gravity within the set time period meets the law of free fall, and it is determined that the object represented by the dynamic point cloud cluster is the falling object.

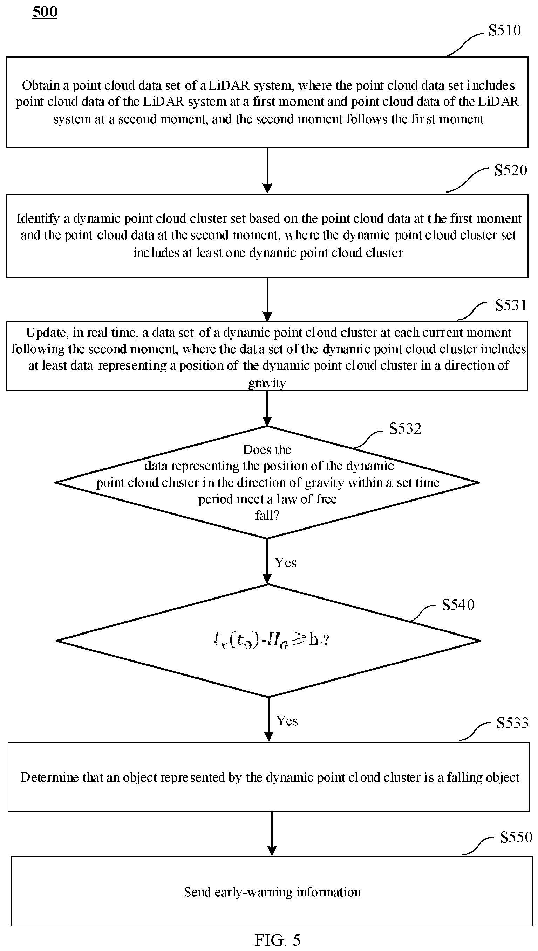

In some embodiments, a classification restriction condition can be added. FIG. 5 shows a method 500 for identifying a falling object according to an embodiment of the present disclosure, in which method a classification restriction condition is added.

As shown in FIG. 5, the method 500 for identifying a falling object further includes: S540: determining whether a position of the dynamic point cloud cluster in the direction of gravity at a moment at which the dynamic point cloud cluster is identified meets the following condition:

$$l_x(t_0) - H_G \geq h,$$

where $l_x(t_0)$ represents the position of the dynamic point cloud cluster in the direction of gravity at the moment at which the dynamic point cloud cluster is identified, $H_G$ represents the ground height, and h is a threshold whereby it is determined whether the height meets a condition. For example, when it is determined whether the object is falling at a high altitude, h can be set to be 10-30 m.

The addition of the above classification restriction condition makes it possible to improve the robustness of the method for identifying a falling object, and reduce the risk of false identification.

In some embodiments, as shown in FIG. 5, the method 500 for identifying a falling object further includes: S550: sending early-warning information in response to determining that the object represented by the dynamic point cloud cluster is the falling object, where the early-warning information includes at least one piece of the following information: an alarm indicating that the falling object is detected, a time at which the falling object is identified, and size, position and motion feature information of the falling object. For example, as shown in FIG. 6, the LiDAR system 10 according to the embodiment of the present disclosure is mounted in a subway station. The LiDAR system is configured to scan an environment around a subway track. When it is determined that an object 20 is a falling object, an alarm indicating that a falling object is identified is sent to, for example, a subway dispatch center, and the subway dispatch center can respond accordingly according to the alarm, such as controlling a subway 30 to stop or change a traveling direction.

In FIG. 5, steps S510, S520, and S531 to S533 are the same as steps S110, S120, and S131 to S133 explained with reference to FIG. 1, and will not be repeated herein. Although the various operations are depicted in the drawings in a particular order, this should not be understood as requiring that these operations must be performed in the particular order shown or in a sequential order, nor should it be understood as requiring that all operations shown must be performed to obtain the desired result. For example, step S550 of sending early-warning information and step S533 of determining that an object represented by the dynamic point cloud cluster is a falling object can be performed concurrently.

In some embodiments, the method for identifying a falling object according to an embodiment of the present disclosure further includes: triggering an image acquisition apparatus to photograph a video of the falling object, and/or storing the point cloud data in response to determining that the object represented by the dynamic point cloud cluster is the falling object. The acquired video and/or the stored point cloud data can record the occurrence of a falling object, for use in subsequent tracing.

In some embodiments, the present disclosure further provides Web-based visualization software, which supports the access of a plurality of LiDAR systems and can be used to present identification results of high-altitude falling objects.

According to another aspect of an embodiment of the present disclosure, there is provided an apparatus 700 for identifying a falling object based on a LiDAR system, including: a first unit 710 configured to obtain a point cloud data set of a LiDAR system, where the point cloud data set includes point cloud data of the LiDAR system at a first moment and point cloud data of the LiDAR system at a second moment, and the second moment follows the first moment; a second unit 720 configured to identify a dynamic point cloud cluster set based on the point cloud data at the first moment and the point cloud data at the second moment, where the dynamic point cloud cluster set includes at least one dynamic point cloud cluster; and a third unit 730 configured to enable the following tracking and determination process for a falling object in response to identifying the dynamic point cloud cluster set: for each dynamic point cloud cluster in the dynamic point cloud cluster set, updating, in real time, a data set of a dynamic point cloud cluster of the LiDAR system at each current moment following the second moment, where the data set of the dynamic point cloud cluster includes at least data representing a position of the dynamic point cloud cluster in a direction of gravity; determining whether the data representing the position of the dynamic point cloud cluster in the direction of gravity within a set time period meets a law of free fall; and determining that an object represented by the dynamic point cloud cluster is a falling object in response to determining that the data meets the law of free fall.

In the present disclosure, for specific implementations and technical effects of the apparatus 700 for identifying a falling object based on a LiDAR system and its corresponding functional units 710 to 730, reference may be made to related descriptions in FIG. 1 and the embodiments as described above, and details are not repeated herein.

According to an embodiment of the present disclosure, the process described above with reference to the flowchart may be implemented as a computer device. The computer system may include a processing apparatus (for example, a central processing unit, a graphics processing unit, etc.), which may perform various appropriate actions and processing based on a program stored in a read-only memory (ROM) or a program loaded from a storage apparatus to a random access memory (RAM).

According to an embodiment of the present disclosure, the process described above with reference to the flowchart may be implemented as an electronic device, including a LiDAR system and the above apparatus 700 for identifying a falling object based on a LiDAR system or the above computer device.

In particular, according to an embodiment of the present disclosure, the process described above with reference to the flowchart 1 may be implemented as a computer software program. For example, an embodiment of the present disclosure provides a computer-readable storage medium storing a computer program, where the computer program contains a program code for performing the method 100 shown in FIG. 1 or the method 500 shown in FIG. 5. When the computer program is executed by the processing apparatus, the above functions defined in the apparatus according to the embodiment of the present disclosure are implemented.

It should be noted that a computer-readable medium described in the embodiment of the present disclosure may be a computer-readable signal medium, or a computer-readable storage medium, or any combination thereof. The computer-readable storage medium may be, for example but not limited to, electric, magnetic, optical, electromagnetic, infrared, or semiconductor systems, apparatuses, or devices, or any combination thereof. A more specific example of the computer-readable storage medium may include, but is not limited to: an electrical connection having one or more wires, a portable computer magnetic disk, a hard disk, a random access memory (RAM), a read-only memory (ROM), an erasable programmable read-only memory (EPROM or flash memory), an optical fiber, a portable compact disk read-only memory (CD-ROM), an optical storage device, a magnetic storage device, or any suitable combination thereof. In the embodiments of the present disclosure, the computer-readable storage medium may be any tangible medium containing or storing a program which may be used by or in combination with an instruction execution system, apparatus, or device. In the embodiments of the present disclosure, the computer-readable signal medium may include a data signal propagated in a baseband or as a part of a carrier, the data signal carrying computer-readable program code. The propagated data signal may be in various forms, including but not limited to an electromagnetic signal, an optical signal, or any suitable combination thereof. The computer-readable signal medium may also be any computer-readable medium other than the computer-readable storage medium. The computer-readable signal medium can send, propagate, or transmit a program used by or in combination with an instruction execution system, apparatus, or device. The program code contained in the computer-readable medium may be transmitted by any suitable medium, including but not limited to: electric wires, optical cables, radio frequency (RF), etc., or any suitable combination thereof.

The above computer-readable medium may be contained in the above computer device. Alternatively, the computer-readable medium may exist independently, without being assembled into the computer device. The above computer-readable medium carries one or more programs, and the one or more programs, when executed by the computer device, cause the computer device to: obtain a point cloud data set of a LiDAR system, where the point cloud data set includes point cloud data of the LiDAR system at a first moment and point cloud data of the LiDAR system at a second moment, and the second moment follows the first moment; identify a dynamic point cloud cluster set based on the point cloud data at the first moment and the point cloud data at the second moment, where the dynamic point cloud cluster set includes at least one dynamic point cloud cluster; and enabling the following tracking and determination process in response to identifying the dynamic point cloud cluster set: for each dynamic point cloud cluster in the dynamic point cloud cluster set, updating, in real time, a data set of a dynamic point cloud cluster at each current moment following the second moment, where the data set of the dynamic point cloud cluster includes at least data representing a position of the dynamic point cloud cluster in a direction of gravity; determining whether the data representing the position of the dynamic point cloud cluster in the direction of gravity within a set time period meets a law of free fall; and determining that an object represented by the dynamic point cloud cluster is a falling object in response to determining that the data meets the law of free fall.

According to another aspect of the present disclosure, there is provided a computer program product including a computer program, where the computer program, when executed by a processor, causes the processor to perform the method for identifying a falling object described in any one of the embodiments above.

Computer program code for performing operations of the embodiments of the present disclosure can be written in one or more programming languages or a combination thereof, where the programming languages include object-oriented programming languages, such as Java, Smalltalk, and C++, and further include conventional procedural programming languages, such as "C" language or similar programming languages. The program code may be completely executed on a computer of a user, partially executed on a computer of a user, executed as an independent software package, partially executed on a computer of a user and partially executed on a remote computer, or completely executed on a remote computer or server. In the circumstance involving a remote computer, the remote computer may be connected to a computer of a user over any type of network, including a local area network (LAN) or wide area network (WAN), or may be connected to an external computer (for example, connected over the Internet using an Internet service provider).

The flowcharts and block diagrams in the accompanying drawings illustrate the possibly implemented architectures, functions, and operations of the method, apparatus, and computer program product according to various embodiments of the present disclosure. In this regard, each block in the flowchart or block diagram may represent a module, program segment, or part of code, and the module, program segment, or part of code contains one or more executable instructions for implementing the specified logical functions. It should also be noted that, in some alternative implementations, the functions marked in the blocks may also occur in an order different from that marked in the accompanying drawings. For example, two blocks shown in succession can actually be performed substantially in parallel, or they can sometimes be performed in the reverse order, depending on the functions involved. It should also be noted that each block in the block diagram and/or the flowchart, and a combination of the blocks in the block diagram and/or the flowchart may be implemented by a dedicated hardware-based system that executes specified functions or operations, or may be implemented by a combination of dedicated hardware and computer instructions.

The related units described in the embodiments of the present disclosure may be implemented by means of software, or may be implemented by means of hardware. The described units may also be arranged in the processor, which, for example, may be described as: a processor including a first unit, a second unit, and a third unit. Names of these units do not constitute a limitation on the units themselves under certain circumstances.

Some exemplary solutions of the present disclosure are described below.

Solution 1. A method for identifying a falling object based on a LiDAR system, the method for identifying a falling object including:

> obtaining a point cloud data set of a LiDAR system, where the point cloud data set includes point cloud data of the LiDAR system at a first moment and point cloud data of the LiDAR system at a second moment, and the second moment follows the first moment;
> identifying a dynamic point cloud cluster set based on the point cloud data at the first moment and the point cloud data at the second moment, where the dynamic point cloud cluster set includes at least one dynamic point cloud cluster; and
> in response to identifying the dynamic point cloud cluster set, determining the second moment as a moment at which the dynamic point cloud cluster is identified, and enabling the following tracking and determination process: for each dynamic point cloud cluster in the dynamic point cloud cluster set,

>> updating, in real time, a data set of a dynamic point cloud cluster at each current moment following the second moment, where the data set of the dynamic point cloud cluster includes at least data representing a position of the dynamic point cloud cluster in a direction of gravity;
>> determining whether the data representing the position of the dynamic point cloud cluster in the direction of gravity within a set time period meets a law of free fall; and
>> determining that an object represented by the dynamic point cloud cluster is a falling object in response to determining that the data meets the law of free fall.

Solution 2. The method for identifying a falling object according to solution 1, where the set time period is at least part of a time period between the second moment and the last moment at which the LiDAR system is capable of detecting the dynamic point cloud cluster.

Solution 3. The method for identifying a falling object according to solution 1 or 2, where the obtaining a point cloud data set of a LiDAR system includes:

> obtaining original point cloud data of the LiDAR system at different moments; and
> calibrating, based on a mounting position and a mounting angle of the LiDAR system, the original point cloud data from a coordinate system of the LiDAR system until a coordinate axis of the coordinate system of the LiDAR system that is perpendicular to a laser emergent direction and points upward overlaps the direction of gravity, to obtain an adjusted point cloud data set.

Solution 4. The method for identifying a falling object according to solution 3, where the obtaining a point cloud data set of a LiDAR system further includes:
performing preprocessing on the adjusted point cloud data set, the preprocessing including at least one of the following:

noise cleaning and dynamic point extraction.

Solution 5. The method for identifying a falling object according to any one of solutions 1 to 4, where the determining whether the data representing the position of the dynamic point cloud cluster in the direction of gravity within a set time period meets a law of free fall includes:

determining whether a difference between a position of the dynamic point cloud cluster in the direction of gravity and an expected position of the dynamic point cloud cluster in the direction of gravity that meets the law of free fall is less than or equal to a threshold.

Solution 6. The method for identifying a falling object according to solution 5, where the difference is a deviation, at each current moment within the set time period, between the position of the dynamic point cloud cluster in the direction of gravity and the expected position of the dynamic point cloud cluster in the direction of gravity that meets the law of free fall.

Solution 7. The method for identifying a falling object according to solution 5 or 6, where the difference is a mean square error of the deviation, within the set time period, between the position of the dynamic point cloud cluster in the direction of gravity and the expected position of the dynamic point cloud cluster in the direction of gravity that meets the law of free fall.

Solution 8. The method for identifying a falling object according to solution 7, where the mean square error is calculated based on the following objective function:

$$f = \sum_{i=0}^{n} \left( a \times \left( l_{\hat{x}}(t_i) - l_x(t_i) \right)^2 \right),$$

where

a is a set constant; $l_{\hat{x}}(t_i)$ represents an expected position of the dynamic point cloud cluster in the direction of gravity that meets the law of free fall when the point cloud data of the LiDAR system is obtained for the $i$th time; $l_x(t_i)$ represents a position of the dynamic point cloud cluster in the direction of gravity when the point cloud data of the LiDAR system is obtained for the $i$th time; and i is any natural number between 0 and n, n representing a total number of times the point cloud data of the LiDAR system is obtained within the set time period.

Solution 9. The method for identifying a falling object according to solution 8, where the constant is set based on at least one of the following factors: an air resistance coefficient, an air density, a windward area of the object represented by the dynamic point cloud cluster, and a velocity of the object relative to air.

Solution 10. The method for identifying a falling object according to any one of solutions 6 to 9, where the expected position of the dynamic point cloud cluster in the direction of gravity that meets the law of free fall is determined according to the following formula:

$$l_{\hat{x}}(t_i) = l_x(t_0) + v_x(t_0) \times t_i - g \times t_i^2,$$

where $l_{\hat{x}}(t_i)$ represents an expected position of the dynamic point cloud cluster in the direction of gravity that meets the law of free fall at a current moment; $l_x(t_0)$ represents a position of the dynamic point cloud cluster in the direction of gravity at a moment at which the dynamic point cloud cluster is identified; $v_x(t_0)$ represents a velocity of the dynamic point cloud cluster in the direction of gravity at the moment at which the dynamic point cloud cluster is identified; $t_i$ represents a time difference between the current moment and the moment at which the dynamic point cloud cluster is identified; and g is the gravitational acceleration.

Solution 11. The method for identifying a falling object according to solution 10, where the velocity $v_x(t_0)$ of the dynamic point cloud cluster in the direction of gravity at the moment at which the dynamic point cloud cluster is identified is determined according to the following equation:

$$v_x(t_0) = \left( l_x(t_1) - l_x(t_0) \right)/t,$$

where $l_x(t_0)$ represents the position of the dynamic point cloud cluster in the direction of gravity at the moment at which the dynamic point cloud cluster is identified, $l_x(t_1)$ represents a position of the dynamic point cloud cluster in the direction of gravity at a next moment of the moment at which the dynamic point cloud cluster is identified, and t represents a time interval between any two adjacent moments.

Solution 12. The method for identifying a falling object according to any one of solutions 1 to 11, further including: determining whether a position of the dynamic point cloud cluster in the direction of gravity at a moment at which the dynamic point cloud cluster is identified meets the following condition:

$$l_x(t_0) - H_G \geq \mathrm{h},$$

where $l_x(t_0)$ represents the position of the dynamic point cloud cluster in the direction of gravity at the moment at which the dynamic point cloud cluster is identified, $H_G$ represents the ground height, and h is a threshold whereby it is determined whether the height meets a condition.

Solution 13. The method for identifying a falling object according to any one of solutions 1 to 12, further including: sending early-warning information in response to determining that the object represented by the dynamic point cloud cluster is the falling object, where the early-warning information includes at least one piece of the following information: an alarm indicating that the falling object is detected, a time at which the falling object is identified, and size, position and motion feature information of the falling object.

Solution 14. The method for identifying a falling object according to any one of solutions 1 to 13, further including: triggering an image acquisition apparatus to photograph a video of the falling object, and/or storing the point cloud data in response to determining that the object represented by the dynamic point cloud cluster is the falling object.

Solution 15. An apparatus for identifying a falling object based on a LiDAR system, including:

a first unit configured to obtain a point cloud data set of a LiDAR system, where the point cloud data set includes point cloud data of the LiDAR system at a first moment and point cloud data of the LiDAR system at a second moment, and the second moment follows the first moment;
a second unit configured to identify a dynamic point cloud cluster set based on the point cloud data at the first moment and the point cloud data at the second moment, where the dynamic point cloud cluster set includes at least one dynamic point cloud cluster; and
a third unit configured to enable the following tracking and determination process for a falling object in response to identifying the dynamic point cloud cluster set: for each dynamic point cloud cluster in the dynamic point cloud cluster set,

updating, in real time, a data set of a dynamic point cloud cluster of the LiDAR system at each current moment following the second moment, where the data set of the dynamic point cloud cluster includes at least data representing a position of the dynamic point cloud cluster in a direction of gravity;
determining whether the data representing the position of the dynamic point cloud cluster in the direction of gravity within a set time period meets a law of free fall; and
determining that an object represented by the dynamic point cloud cluster is a falling object in response to determining that the data meets the law of free fall.

Solution 16. A computer device, including:

at least one processor; and
at least one memory having a computer program stored thereon,
where the computer program, when executed by the at least one processor, causes the at least one processor to perform a method for identifying a falling object according to any one of solutions 1 to 14.

Solution 17. An electronic device, including:

a LiDAR system; and
an apparatus for identifying a falling object according to solution 15 or a computer device according to solution 16.

Solution 18. A computer-readable storage medium having a computer program stored thereon, where the computer program, when executed by a processor, causes the processor to perform a method for identifying a falling object according to any one of solutions 1 to 14.

Solution 19. A computer program product, including a computer program, where the computer program, when executed by a processor, causes the processor to perform a method for identifying a falling object according to any one of solutions 1 to 14.

The above descriptions are merely preferred embodiments of the present disclosure and explanations of the technical principles utilized. Those skilled in the art should understand that the scope of the invention involved in the embodiments of the present disclosure is not limited in the technical solution formed by a particular combination of the above technical features, and shall also encompass other technical solutions formed by any combination of the above technical features or equivalent features thereof without departing from the above inventive concepts. For example, a technical solution formed by a replacement of the above features with technical features with similar functions in the technical features disclosed in the embodiments of the present disclosure (but not limited thereto) also falls within the scope of the present disclosure.

**Claims**

1. A method for identifying a falling object based on a LiDAR system, the method for identifying a falling object comprising:

   obtaining a point cloud data set of a LiDAR system, wherein the point cloud data set comprises point cloud data of the LiDAR system at a first moment and point cloud data of the LiDAR system at a second moment, and the second moment follows the first moment;
   identifying a dynamic point cloud cluster set based on the point cloud data at the first moment and the point cloud data at the second moment, wherein the dynamic point cloud cluster set comprises at least one dynamic point cloud cluster; and
   in response to identifying the dynamic point cloud cluster set, determining the second moment as a moment at which the dynamic point cloud cluster is identified, and enabling the following tracking and determination process: for each dynamic point cloud cluster in the dynamic point cloud cluster set,

      updating, in real time, a data set of a dynamic point cloud cluster at each current moment following the second moment, wherein the data set of the dynamic point cloud cluster comprises at least data representing a position of the dynamic point cloud cluster in a direction of gravity;
      determining whether the data representing the position of the dynamic point cloud cluster in the direction of gravity within a set time period meets a law of free fall; and
      determining that an object represented by the dynamic point cloud cluster is a falling object in response to determining that the data meets the law of free fall.

2. The method for identifying a falling object according to claim 1, wherein the set time period is at least part of a time period between the second moment and the last moment at which the LiDAR system is capable of detecting the dynamic point cloud cluster.

3. The method for identifying a falling object according to claim 1 or 2, wherein the obtaining a point cloud data set of a LiDAR system comprises:

   obtaining original point cloud data of the LiDAR system at different moments; and
   calibrating, based on a mounting position and a mounting angle of the LiDAR system, the original point cloud data from a coordinate system of the LiDAR system until a coordinate axis of the coordinate system of the LiDAR system that is perpendicular to a laser emergent direction and points upward overlaps the direction of gravity, to obtain an adjusted point cloud data set.

4. The method for identifying a falling object according to claim 3, wherein the obtaining a point cloud data set of a LiDAR system further comprises:
   performing preprocessing on the adjusted point cloud data set, the preprocessing comprising at least one of the following: noise cleaning and dynamic point extraction.

5. The method for identifying a falling object according to any of claims 1 to 4, wherein the determining whether the data representing the position of the dynamic point cloud cluster in the direction of gravity within a set time period meets a law of free fall comprises:
   determining whether a difference between a position of the dynamic point cloud cluster in the direction of gravity and an expected position of the dynamic point cloud cluster in the direction of gravity that meets the law of free fall is less than or equal to a threshold.

6. The method for identifying a falling object according to claim 5, wherein the difference is a deviation, at each current moment within the set time period, between the position of the dynamic point cloud cluster in the direction of gravity and the expected position of the dynamic point cloud cluster in the direction of gravity that meets the law of free fall.

7. The method for identifying a falling object according to claim 5 or 6, wherein the difference is a mean square error of the deviation, within the set time period, between the position of the dynamic point cloud cluster in the direction of gravity and the expected position of the dynamic point cloud cluster in the direction of gravity that meets the law of free fall.

8. The method for identifying a falling object according to claim 7, wherein the mean square error is calculated based on the following objective function:

$$f = \sum_{i=0}^{n} \left( a \times (l_{\tilde{x}}(t_i) - l_x(t_i))^2 \right),$$

wherein
a is a set constant; $l_{\tilde{x}}(t_i)$ represents an expected position of the dynamic point cloud cluster in the direction of gravity that meets the law of free fall when the point cloud data of the LiDAR system is obtained for the $i^{th}$ time; $l_x(t_i)$ represents a position of the dynamic point cloud cluster in the direction of gravity when the point cloud data of the LiDAR system is obtained for the $i^{th}$ time; and i is any natural number between 0 and n, n representing a total number of times the point cloud data of the LiDAR system is obtained within the set time period.

9. The method for identifying a falling object according to claim 8, wherein the constant is set based on at least one of the following factors: an air resistance coefficient, an air density, a windward area of the object represented by the dynamic point cloud cluster, and a velocity of the object relative to air.

10. The method for identifying a falling object according to any one of claims 6 to 9, wherein the expected position of the dynamic point cloud cluster in the direction of gravity that meets the law of free fall is determined according to the following formula:

$$l_{\tilde{x}}(t_i) = l_x(t_0) + v_x(t_0) \times t_i - g \times t_i^2,$$

wherein $l_{\tilde{x}}(t_i)$ represents an expected position of the dynamic point cloud cluster in the direction of gravity that meets the law of free fall at a current moment; $l_x(t_0)$ represents a position of the dynamic point cloud cluster in the direction of gravity at a moment at which the dynamic point cloud cluster is identified; $v_x(t_0)$ represents a velocity of the dynamic point cloud cluster in the direction of gravity at the moment at which the dynamic point cloud cluster is identified; $t_i$ represents a time difference between the current moment and the moment at which the dynamic point cloud cluster is identified; and $g$ is a gravitational acceleration.

11. The method for identifying a falling object according to claim 10, wherein the velocity $v_x(t_0)$ of the dynamic point cloud cluster in the direction of gravity at the moment at which the dynamic point cloud cluster is identified is determined according to the following equation:

$$v_x(t_0) = \left( l_x(t_1) - l_x(t_0) \right)/t,$$

wherein $l_x(t_0)$ represents the position of the dynamic point cloud cluster in the direction of gravity at the moment at which the dynamic point cloud cluster is identified, $l_x(t_1)$ represents a position of the dynamic point cloud cluster in the direction of gravity at a next moment of the moment at which the dynamic point cloud cluster is identified, and $t$ represents a time interval between any two adjacent moments.

12. The method for identifying a falling object according to any of claims 1 to 11, further comprising:
determining whether a position of the dynamic point cloud cluster in the direction of gravity at a moment at which the dynamic point cloud cluster is identified meets the following condition:

$$l_x(t_0) - H_G \geq h,$$

wherein $l_x(t_0)$ represents the position of the dynamic point cloud cluster in the direction of gravity at the moment at which the dynamic point cloud cluster is identified, $H_G$ represents a ground height, and h is a threshold whereby it is determined whether the height meets a condition.

13. The method for identifying a falling object according to any of claims 1 to 12, further comprising:
sending early-warning information in response to determining that the object represented by the dynamic point cloud cluster is the falling object, wherein the early-warning information comprises at least one piece of the following information: an alarm indicating that the falling object is detected, a time at which the falling object is identified, and size, position and motion feature information of the falling object.

14. The method for identifying a falling object according to any of claims 1 to 13, further comprising:
triggering an image acquisition apparatus to photograph a video of the falling object, and/or storing the point cloud data in response to determining that the object represented by the dynamic point cloud cluster is the falling object.

15. An apparatus for identifying a falling object based on a LiDAR system, the apparatus comprising:

a first unit configured to obtain a point cloud data set of a LiDAR system, wherein the point cloud data set comprises point cloud data of the LiDAR system at a first moment and point cloud data of the LiDAR system at a second moment, and the second moment follows the first moment;
a second unit configured to identify a dynamic point cloud cluster set based on the point cloud data at the first moment and the point cloud data at the second moment, wherein the dynamic point cloud cluster set comprises at least one dynamic point cloud cluster; and
a third unit configured to enable the following tracking and determination process for a falling object in response to identifying the dynamic point cloud cluster set: for each dynamic point cloud cluster in the dynamic point cloud cluster set,

updating, in real time, a data set of a dynamic point cloud cluster of the LiDAR system at each current moment following the second moment, wherein the data set of the dynamic point cloud cluster comprises at least data representing a position of the dynamic point cloud cluster in a direction of gravity;
determining whether the data representing the position of the dynamic point cloud cluster in the direction of gravity within a set time period meets a law of free fall; and
determining that an object represented by the dynamic point cloud cluster is a falling object in response to determining that the data meets the law of free fall.

16. A computer device, comprising:

at least one processor; and
at least one memory having a computer program stored thereon,
wherein the computer program, when executed by the at least one processor, causes the at least one processor to perform a method for identifying a falling object according to any one of claims 1 to 14.

17. An electronic device, comprising:

a LiDAR system; and
an apparatus for identifying a falling object according to claim 15 or a computer device according to claim 16.

18. A computer-readable storage medium having a computer program stored thereon, wherein the computer program, when executed by a processor, causes the processor to perform a method for identifying a falling object according to any one of claims 1 to 14.

<u>100</u>

S110

Obtain a point cloud data set of a LiDAR system, where the point cloud data set includes point cloud data of the LiDAR system at a first moment and point cloud data of the LiDAR system at a second moment, and the second moment follows the first moment

S120

Identify a dynamic point cloud cluster set based on the point cloud data at the first moment and the point cloud data at the second moment, where the dynamic point cloud cluster set includes at least one dynamic point cloud cluster

S131

Update, in real time, a data set of a dynamic point cloud cluster at each current moment following the second moment, where the data set of the dynamic point cloud cluster includes at least data representing a position of the dynamic point cloud cluster in a direction of gravity

S132

Does the data representing the position of the dynamic point cloud cluster in the direction of gravity within a set time period meet a law of free fall?

S130

Yes

S133

Determine that an object represented by the dynamic point cloud cluster is a falling object in response to determining that the data meets the law of free fall

FIG. 1

**S110**

S210

Obtain original point cloud data of the LiDAR system at different moments

S220

Calibrate, based on a mounting position and a mounting angle of the LiDAR system, the original point cloud data at each moment from a coordinate of the LiDAR system until a coordinate axis of the coordinate system of the LiDAR system that is perpendicular to a laser emergent direction and points upward overlaps the direction of gravity, to obtain an adjusted point cloud data set

S230

Perform preprocessing on the adjusted point cloud data set, the preprocessing including at least one of the following: noise cleaning and dynamic point extraction

FIG. 2

**S120**

S310

Compare the obtained point cloud data of the LiDAR system at the first moment with the obtained point cloud data of the LiDAR system at the second moment following the first moment

S320

Extract, from the point cloud data at the second moment, a set of point clouds different from data in the point cloud data at the first moment to serve as a dynamic point cloud cluster set, where the dynamic point cloud cluster set includes at least one dynamic point cloud cluster

FIG. 3

## S130

S410

Update, in real time, a data set of a dynamic point cloud cluster at each current moment following the second moment, where the data set of the dynamic point cloud cluster includes at least data representing a position of the dynamic point cloud cluster in a direction of gravity

S421

Calculate, based on a free fall motion model, an expected position of the dynamic point cloud cluster in the direction of gravity at each current moment within a set time period that meets a law of free fall

S422

Based on an objective function, calculate a mean square error, within the set time period, of a deviation between the position of the dynamic point cloud cluster in the direction of gravity and the expected position of the dynamic point cloud cluster in the direction of gravity that meets the law of free fall

S423

Is the mean square error less than or equal to a threshold?

Yes

S430

Determine that an object represented by the dynamic point cloud cluster is a falling object in response to determining that the data meets the law of free fall

FIG. 4

500

S510

Obtain a point cloud data set of a LiDAR system, where the point cloud data set includes point cloud data of the LiDAR system at a first moment and point cloud data of the LiDAR system at a second moment, and the second moment follows the first moment

S520

Identify a dynamic point cloud cluster set based on the point cloud data at the first moment and the point cloud data at the second moment, where the dynamic point cloud cluster set includes at least one dynamic point cloud cluster

S531

Update, in real time, a data set of a dynamic point cloud cluster at each current moment following the second moment, where the data set of the dynamic point cloud cluster includes at least data representing a position of the dynamic point cloud cluster in a direction of gravity

S532

Does the data representing the position of the dynamic point cloud cluster in the direction of gravity within a set time period meet a law of free fall?

Yes

S540

$l_x(t_0)\text{-}H_G \geq h$ ?

Yes

S533

Determine that an object represented by the dynamic point cloud cluster is a falling object

S550

Send early-warning information

FIG. 5

FIG. 6

700

First unit
710

Second unit
720

Third unit
730

FIG. 7

Europäisches
Patentamt

European
Patent Office

Office européen
des brevets

# EUROPEAN SEARCH REPORT

Application Number

EP 23 19 4725

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2018/172828 A1 (MOODY JOHN E [US] ET AL) 21 June 2018 (2018-06-21) <br> * abstract * <br> * paragraphs [0002], [0006], [0061], [0098], [0107] * <br> ----- | 1,15-18 | INV. <br> G01S7/48 <br> G01S17/58 <br> G01S17/66 <br> G01S17/86 <br> G06T7/70 |
| A | CN 114 005 247 A (SHENZHEN LUMI UNITED TECH CO LTD) 1 February 2022 (2022-02-01) <br> * abstract * <br> ----- | 1,15-18 | |

TECHNICAL FIELDS
SEARCHED      (IPC)

G01S
G06T

The present search report has been drawn up for all claims

| Place of search | Date of completion of the search | Examiner |
|---|---|---|
| Munich | 6 February 2024 | Alberga, Vito |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
..................................................................
& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 23 19 4725

This annex lists the patent family members relating to the patent documents cited in the above-mentioned European search report.
The members are as contained in the European Patent Office EDP file on
The European Patent Office is in no way liable for these particulars which are merely given for the purpose of information.

06-02-2024

| Patent document cited in search report | | Publication date | Patent family member(s) | | Publication date |
|---|---|---|---|---|---|
| US 2018172828 | A1 | 21-06-2018 | US 2018172828 A1 | | 21-06-2018 |
| | | | WO 2018118915 A1 | | 28-06-2018 |
| CN 114005247 | A | 01-02-2022 | NONE | | |

For more details about this annex : see Official Journal of the European Patent Office, No. 12/82